# EUROPÄISCHE PATENTANMELDUNG

(11) **EP 0 633 067 A2**
(43) Veröffentlichungstag der Anmeldung: **11.01.1995**
(21) Anmeldenummer: 94109612.5
(22) Anmeldetag: 22.06.1994
(51) Int. Cl.: B03B 9/06, B07B 9/00

(54) **Einrichtung zur Ausscheidung bzw. zum Trennen von Stoffen unterschiedlicher Dichte eines Stoffgemisches oder Stoffgemenges**

(30) Priorität: 07.07.1993 AT 1330/93; 18.10.1993 AT 2079/93; 10.05.1994 AT 972/94
(71) Anmelder: Rüf, Anton, A-6972 Fussach (AT)
(72) Erfinder: Rüf, Anton, A-6972 Fussach (AT)
(74) Vertreter: Hefel, Herbert, Dipl.-Ing.

(57) **Zusammenfassung**

Die Einrichtung dient zum Ausscheiden bzw. zum Trennen von Stoffen unterschiedlicher Dichte eines Stoffgemisches oder Stoffgemenges, insbesondere von Störstoffen wie Steinen, Holzteilen, Scherben, Kunststoffteilen u.dgl. aus zerkleinertem Rohkompost. Sie weist ein im wesentlichen waagrecht liegendes Rüttelsieb (14) zur Aufnahme des Stoffgemisches auf, das eine in bzw. gegen die Durchlaufrichtung der auszuscheidenden Störstoffe gerichtete Rüttel- und/oder Schwingbewegung ausführt. Oberhalb des Rüttelsiebes (14) sind im wesentlichen quer zur erwähnten Durchlaufrichtung angeordnete und sich in Durchlaufrichtung bewegende Streichleisten (27) vorgesehen. Unterhalb des Rüttelsiebes (14) ist ein das durch das Rüttelsieb (14) fallende Siebgut seitlich austragendes Förderband (4) vorgesehen. An der einen, die Störstoffe abwerfenden Stirnseite (11) des Rüttelsiebes (14) und unterhalb dieser Stirnseite (11) ist mindestens eine Ausblasmündung (12) eines Gebläses (43) angeordnet. Unterhalb der Stirnseite (11) des Rüttelsiebes (14) und der Ausblasmündung (12) des Gebläses ist ein geneigt angeordnetes Förderband vorgesehen.

## Beschreibung

Die Erfindung bezieht sich auf eine Einrichtung zur Ausscheidung bzw. zum Trennen von Stoffen unterschiedlicher Dichte eines Stoffgemisches oder Stoffgemenges, insbesondere von Störstoffen wie Steinen, Holzteilen, Metallteilen, Glasscheiben, Kunststoffteilen u.dgl. aus zerkleinertem Rohkompost.

Unter Rohkompost im Sinne der gegenständlichen Erfindung werden organische, biologische Abfälle verstanden, nämlich Klär- oder Frischschlamm, Grünschnitte, Stroh, Biotonneninhalte u.dgl. mehr. Diese Materialien werden auf mechanischem Wege und mittels geeigneter Einrichtungen zerkleinert, wobei erfahrungsgemäß die nichtbiologischen Anteile dieses Rohkompostes den Zerkleinerungsvorgang unbeschädigt überstehen, und der so gewonnene Frischkompost muß, bevor er auf die Rotte gebracht werden kann, von diesen Störstoffen gereinigt werden. Unter Störstoffe im Sinne der Erfindung werden Kunststoffteile, Glasscheiben, Steine, große Holzteile und auch Metallteile u.dgl. verstanden, die biologisch nicht abbaubar sind. In der Regel ist dieser Rohkompost auch von Fetzen von Kunststofffolien durchsetzt, die von jenen Müllsäcken stammen, die für die Hausmüllentsorgung eingesetzt werden. Bislang wurden diese Störstoffe händisch ausgeklaubt, ein Verfahren, das nicht nur sehr aufwendig ist, sondern auch mit erheblichen Geruchsbelästigungen für die Beteiligten verbunden ist.

Aufgabe der Erfindung ist es nun, eine Einrichtung vorzusehen, mit der dieses Ausscheiden bzw. Trennen möglich ist ohne manuellen Eingriff, und zur Lösung dieser Aufgabe werden jene Maßnahmen erfindungsgemäß vorgeschlagen, die Inhalt und Gegenstand des Patentanspruches 1 sind.

Im folgenden werden unter Bezug auf die Zeichnungen mehrere verschiedene Ausführungsbeispiele der Erfindung erörtert, wobei zweckmäßige Maßnahmen in den Unteransprüchen festgehalten sind.

Die Zeichnungen zeigen:

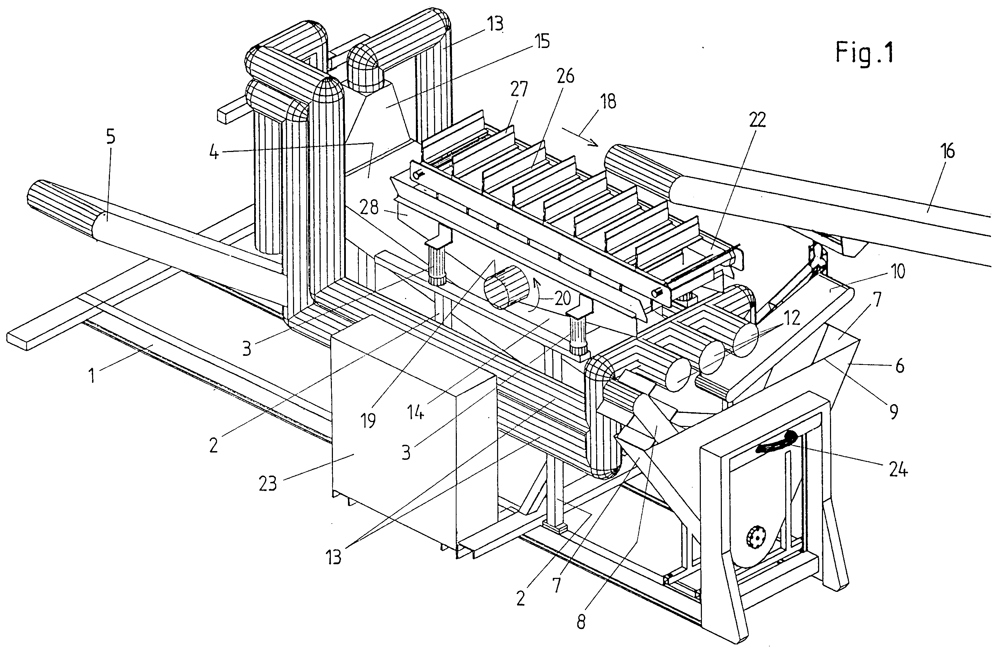

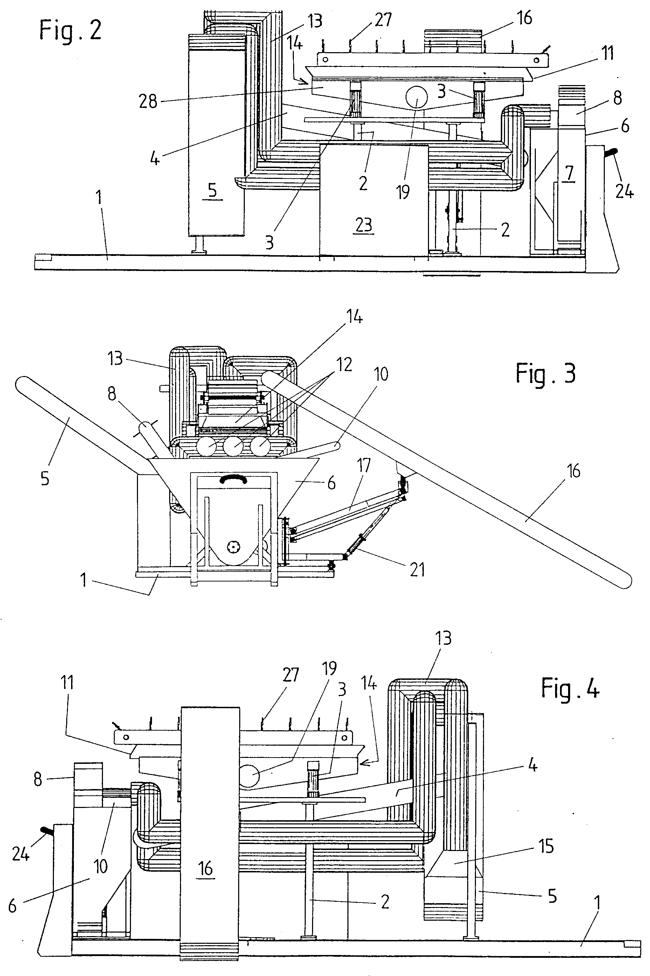

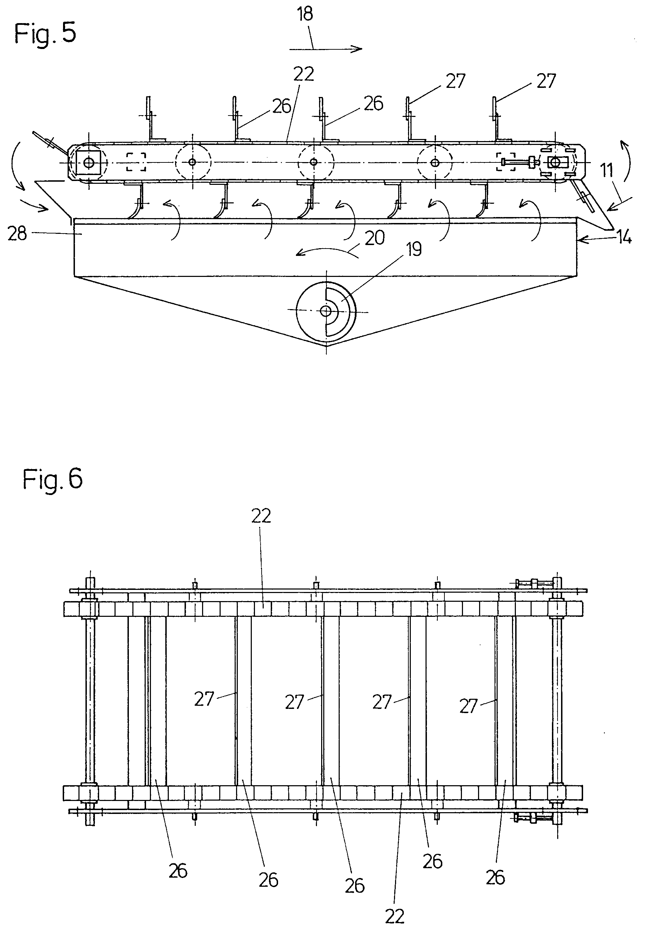

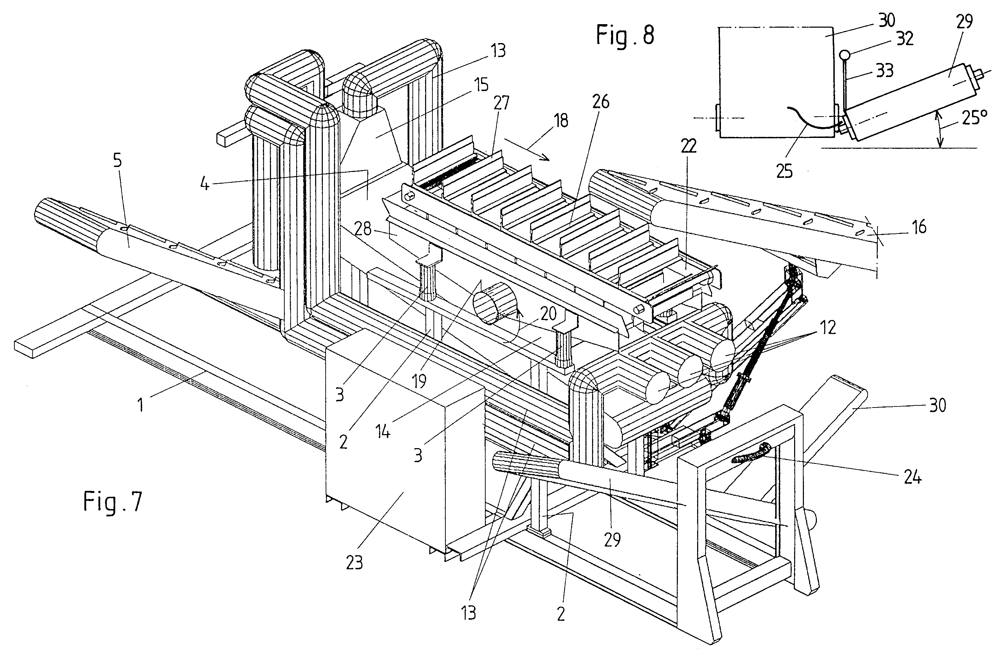

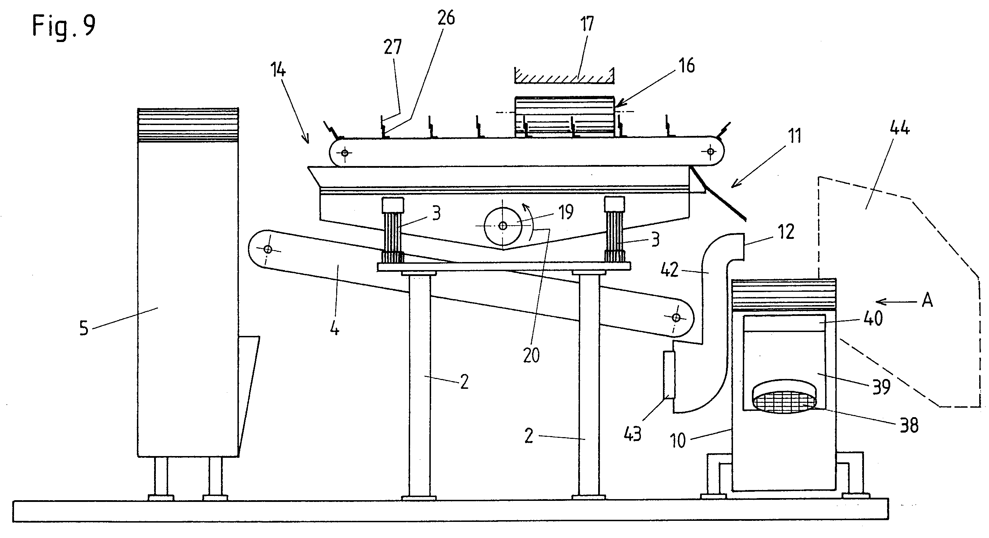

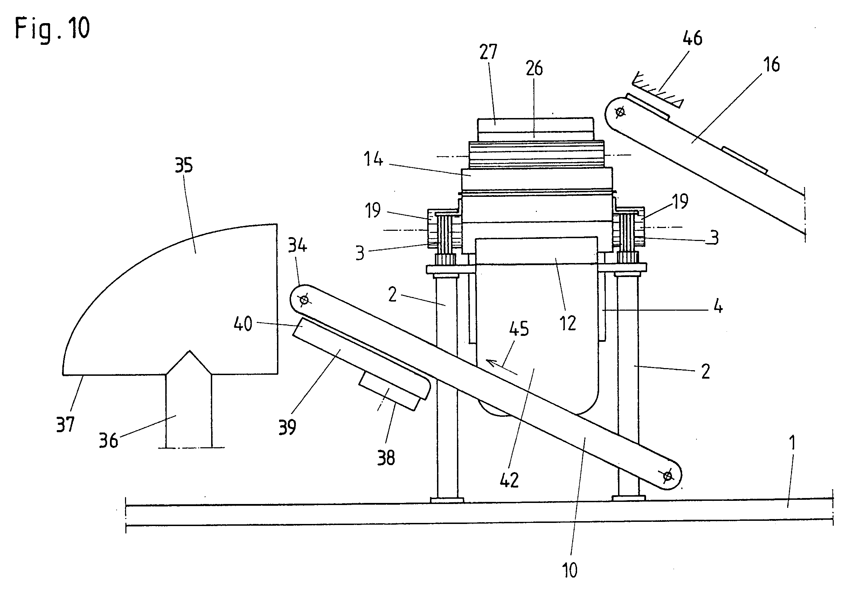

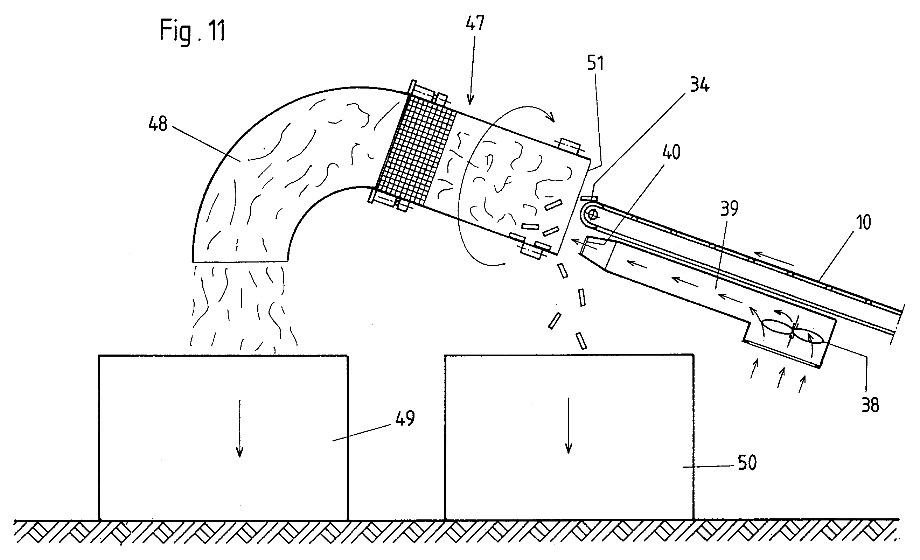

Fig. 1 die Einrichtung in einer ersten Ausführungsform in Schrägsicht; Fig. 2 eine erste Seitenansicht; Fig. 3 eine Stirnansicht; Fig. 4 eine zweite Seitenansicht; Fig. 5 das Rüttelsieb in Ansicht in einem gegenüber den anderen Figuren erheblich vergrößerten Maßstab und Fig. 6 eine Draufsicht auf das Rüttelsieb nach Fig. 5; Fig. 7 eine Ausführungsvariante der Einrichtung nach Fig. 1; Fig. 8 eine Stirnansicht des quergeneigten Förderbandes; Fig. 9 eine dritte Ausführungsform der erfindungsgemäßen Einrichtung von der Seite gesehen und Fig. 10 von vorne - Blickrichtung Pfeil A in Fig. 9; Fig. 11 eine Ausführungsvariante zu der in Fig. 10 dargestellten Einrichtung - von der Seite gesehen.

Die Einrichtung in einer ersten Ausführungsform mit ihren einzelnen Aggregaten, auf die im folgenden noch eingegangen werden wird, ist von einem horizontalen Rahmen 1 getragen, der umfangsgeschlossen ausgebildet ist. Mit diesem Rahmen 1 verbundene Steher 2 tragen ihrerseits Federpakete 3, an welchen das Rüttelsieb 14 befestigt ist. Dieses Rüttelsieb 14 ist mit einer rotierenden Unwucht 19 ausgestattet, so daß beim Rotieren dieser Unwucht 19 das Sieb 14 eine gegen die Durchlaufrichtung (Pfeil 18) gerichtete Hubbewegung durchführt, die durch den Pfeil 20 angedeutet ist. Das Sieb 14 hat eine Maschenweite von ca. 35 mm. Das Sieb ist zweckmäßigerweise austauschbar angeordnet, so daß Siebe mit verschiedenen Maschenweiten einsetzbar sind. Oberhalb der Auflageebene des Siebes 14 sind zu dessen beiden Seiten parallel zur Durchlaufrichtung (Pfeil 18) liegende, endlose, umlaufende Ketten 22 in vertikalen Ebenen vorgesehen, die über Antriebsräder sowie über Umlenkräder und Stützräder geführt sind. Mit diesen Ketten 22 sind in im wesentlichen gleichen Abständen holmartige Träger 26 endseitig verbunden, die als L-Profil-Schienen ausgebildet sind. An dem von den Ketten 22 jeweils abstehenden Schenkel dieser L-Profil-Schienen sind mit geeigneten, hier nicht näher gekennzeichneten Mitteln Streichleisten 27 aus einem abriebfesten, elastischen Material befestigt. Der Abstand der Befestigungslinie der auf der Seite des Siebes 14 liegenden holmartigen Träger 26 von der Auflageebene des Siebes 14 ist dabei kleiner als die Höhe der Streichleisten 27, so daß diese Streichleisten 27, wenn sie das Sieb 14 überfahren (Fig. 5), verformt werden wie aus der beiliegenden Zeichnung ersichtlich. Die Antriebsrichtung dieser umlaufenden Ketten 22 ist so gewählt, daß die jeweils mit dem Sieb 14 in Wirkverbindung stehenden Streichleisten 27 sich in Durchlauffichtung (Pfeil 18) bewegen.

Die umlaufenden Ketten 22 mit den Streichleisten 27 können innerhalb der Anlage stationär angeordnet sein, es ist aber auch möglich, sie mit dem Rahmen 28 des Siebes 14 zu verbinden, so daß Streichleisten 27 und Rüttelsieb 14 gemeinsam schwingen. Dabei können zwischen den beiden genannten Bauteilen Schwingungsglieder vorgesehen werden, die bewirken, daß diese beiden Bauteile sich synchron bewegen oder aber phasenverschoben, also gegenläufig schwingen.

Die Streichleisten 27 können sich quer zur Durchlaufrichtung (Pfeil 18) erstrecken, wie in Fig. 5 veranschaulicht. Es wäre auch möglich, die Streichleisten 27 bzw. deren Träger 26 so anzuordnen, daß sie gegenüber der Durchlauffichtung (Pfeil 18) etwas schräg stehen, und zwar in wechselnder Folge jeweils um gleiche Winkel versetzt, jedoch nach entgegengesetzten Seiten ausgerichtet sind. Eine andere Möglichkeit wäre, die Streichleisten 27 bzw. deren Träger 26 selbst winkelig zu gestalten, wobei dieser Winkel nahe einem gestreckten Winkel (180°) liegen wird. Diese Streichleisten 27 bewirken auch, daß die Siebfläche bzw. das Rüttelsieb ständig gereinigt wird und somit stets sauber und fünktionstüchtig ist.

Unterhalb des Rüttelsiebes 14 ist ein erstes Förderband 4 angeordnet, das sich in Bewegungsrichtung des Rüttelsiebes 14 erstreckt und das hier etwas schräg nach oben gerichtet ist. Ein zweites Förderband 5, das zum ersterwähnten Förderband 4 winkelig ausgerichtet ist, schließt hier an. Diese Förderbänder dienen zur Austragung jenes Gutes, das durch das Rüttelsieb hindurchfällt.

An der stirnseitigen Abwurfseite 11 des Rüttelsiebes 14 beim ersten Ausführungsbeispiel der Erfindung und unterhalb desselben ist als Separator ein Wasserbehälter 6 vorgesehen, der keilförmig gestaltet ist mit nach unten konvergierenden Seitenwänden 7. Als Separator im Sinne dieser Erfindung wird eine Einrichtung verstanden, mit der Stoffe oder Stoffteile unterschiedlicher Dichte oder Wichte trennbar sind, sei es durch Massenkräfte, Trägheit, Auftriebskräfte o.dgl. Innerhalb dieses Wasserbehälters 6 und parallel zur einen Seitenwand 7 ist ein endlos umlaufender Kratzförderer 8 angeordnet, dessen eine innere Ende im Scheitelbereich des keilförmigen Wasserbehälters 6 liegt und dessen anderes Ende über den oberen Rand 9 des Wasserbehälters 6 ragt. Ferner ist hier ein endlos umlaufendes Förderband 10 angeordnet, dessen eine innere Ende knapp unterhalb dem oberen Rand 9 des Wasserbehälters liegt. Zweckmäßigerweise ist dieses Förderband 10 wasserdurchlässig ausgebildet, beispielsweise netzartig oder durchbrochen. Das abgebende Ende dieses Förderbandes 10 ragt über den Behälter 6 hinaus. Der Rand 9 des Wasserbehälters 6 verläuft rechteckig und der Behälter 6 ist so angeordnet, daß eine seiner langen Rechteckseiten parallel zur Abgabeseite 11 des Rüttelsiebes 14 steht.

Zwischen der stirnseitigen Abwurfseite 11 des Rüttelsiebes 14 und dem oberen Rand des Wasserbehälters 6 liegen Mündungsöffnungen 12 von Rohren 13. Beim gezeigten ersten Ausführungsbeispiel sind hier drei nebeneinander liegende Mündungsöffnungen 12 vorgesehen. Es wäre denkbar, hier eine einzige Mündungsöffnung entsprechender Breite vorzusehen. Die Achsen dieser Mündungsöffnungen 12 liegen im wesentlichen waagrecht. Die Rohre oder Schläuche 13 erstrecken sich bis in den rückwärtigen Bereich des Rüttelsiebes 14 und die rückseitigen Mündungsöffnungen sind mit Saugmündungen 15 bestückt, deren Öffnungen knapp oberhalb der Förderbänder 4 bzw. 5 liegen.

Zur Beschickung der Einrichtung dient ein Zubringerförderband 16, das von einem mittels einer Kolben-Zylinder-Einheit 21 verstellbaren, schwenkbar gelagerten Ausleger 17 getragen ist. Die dem Antrieb der einzelnen Aggregate dienenden Motoren sind der Übersichtlichkeit wegen nicht dargestellt. Die zu ihrer Inbetriebnahme und Steuerung dienenden Gerätschaften sind in einem Steuerschrank 23 untergebracht, der ebenfalls vom Rahmen 1 getragen ist. Innerhalb der Rohre oder Schläuche 13 sind zur Erzeugung eines Luftstromes Axialgebläse eingebaut. Stirnseitig am Rahmen 1 ist ein Haken 24 festgelegt, an welchem eine Hub- und/oder Zugeinrichtung anhängbar ist, um die Einrichtung als Ganzes zu verladen.

Das Material, mit welchem die vorstehend beschriebene Einrichtung über das Zubringerförderband 16 beschickt wird, ist zerkleinerter Kompost, bestehend aus organischen, biologischen abbaubaren Substanzen, die von Störstoffen der eingangs erwähnten Art durchsetzt sind. Dieses Material gelangt über das Zubringerförderband 16 auf das Rüttelsieb 14, durch dessen Maschen der zerkleinerte Frischkompost auf das darunter liegende Förderband 4 fällt. Leichte Teile wie Fetzen aus Kunststoffolien, die zerrissen und zerkleinert sind und die ebenfalls durch die Maschen des Rüttelsiebes 14 fallen, werden über die Saugmündungen 15 abgesaugt, so daß ein von Kunststoffetzen befreites Material über die Förderbänder 4 und 5 seitlich ausgetragen werden kann. Auf dem Rüttelsieb werden die kleinformatigen organischen Feststoffe, die eventuell sich zusammenballen, durch die Streichleisten aufgebrochen und fallen dann durch die Maschen des Rüttelsiebes 14, die großformatigen Störstoffe jedoch können das Sieb 14 passieren und gelangen zur Abwurfseite 11 des Rüttelsiebes 14. Hier an der Abwurfseite 11 werden die grobstückigen Teile ausgeworfen, beispielsweise Metallteile, Steine, größere Holzteile und auch noch Folienreste von Müllsäcken u.dgl., die hier in den Wasserbehälter 6 fallen. Der Luftstrom, der aus den Mündungsöffnungen 12 der Rohre 13 strömt und der auch die über die Saugmündungen 15 abgesaugten Kunststofffetzen mit sich führt, bläst größere, aber leichte Teile über den Wasserbehälter 6 hinweg in einen hier nicht dargestellten, stirnseitig angeordneten Sammelbehälter.

Die schweren Teile jedoch, die durch den Luftstrom hindurch in den Wasserbehälter 6 fallen, werden anschließend über den Kratzförderer 8 seitlich ausgetragen. Leichtere Teile hingegen, die den Luftstrom durchsetzt haben und in den Wasserbehälter gefallen sind und die auf dem Wasser schwimmen, beispielsweise Holzstücke, werden über das flach liegende, wasserdurchlässige Förderband 10 aus dem Wasserbehälter 6 entfernt. Im Abwurfbereich der austragenden Aggregate (Kratzförderer 8 und Förderband 10) können ebenfalls Sammelbehälter für diese Störstoffe beigestellt und aufgestellt werden.

Das zweite Ausführungsbeispiel nach Fig. 7 unterscheidet sich vom oben besprochenen dadurch, daß hier als Separator unterhalb der Stirnseite 11 des Rüttelsiebes 14 zwei V-förmig zueinander angeordnete Förderbänder 29 und 30 vorgesehen sind, die nebeneinander liegen, wobei der Scheitel der V-förmigen Anordnung etwa in der vertikalen Längsmittelebene der Einrichtung liegt. Das eine Förderband 29 der beiden V-förmig angeordneten Förderbänder 29 und 30 ist zusätzlich um seine Längsachse etwas geneigt, ca. 30° (Fig. 8), und entlang seiner tiefer liegenden Längskante 31 ist eine Rinne 25 angeordnet, die zum aufgabeseitigen Ende des anderen Förderbandes 30 führt. Entlang und oberhalb der tiefer liegenden Längskante 31 des quergeneigten Förderbandes 29 verläuft ein Holm 32, der am Tragrahmen des Förderbandes 29 festgelegt ist und an dem eine nach unten hängende Schürze 33 angeordnet ist, beispielsweise ein Gummistreifen mit mehreren vertikalen Schlitzen, die eine Art geschlitzter Vorhang bildet. Das Förderband 29 läuft beim betriebsmäßigen Einsatz mit relativ hoher Geschwindigkeit, die zweckmäßigerweise regelbar ist. Holz und andere leichte Teile, die auf diesen Separator bzw. auf das Förderband 29 fallen, bleiben auf dem Band liegen, da sie wegen ihres relativ geringen Gewichtes rasch die Bandgeschwindigkeit annehmen, was noch durch die Oberflächengestaltung des Bandes selbst begünstigt werden kann. Schwere Störstoffe hingegen wie Steine, Metallstücke, Scherben u.dgl. fangen auf diesem Förderband zu purzeln an und fallen anschließend wegen der seitlichen Neigung dieses Förderbandes in die Rinne 25 und gelangen dann entlang dieser geneigten Rinne auf das aufgabenseitige Ende des Förderbandes 30, mit dem sie seitlich ausgetragen werden. Die geschlitzte Schürze 33 hält die relativ leichten Störstoffe auf dem Förderband 29 zurück, läßt hingegen schwerere Teil möglichst ungehindert auf die Rinne 25 durchtreten.

Das dritte Ausführungsbeispiel nach den Fig. 9 und 10 entspricht in seinem grundsätzlichen Aufbau den vorstehend beschriebenen Ausführungsbeispielen der Erfindung, wobei auch hier in den Fig. 9 und 10 zur Bezeichnung gleicher bzw. gleichwertiger Teile dieselben Hinweisziffern verwendet worden sind, die auch bei der Beschreibung der erstbesprochenen Ausführungsbeispiele verwendet wurden.

Hier bei diesem Ausführungsbeispiel ist an der stirnseitigen Abwurfseite 11 des Rüttelsiebes 14 und unterhalb desselben ist als Separator ein Förderband 10 angeordnet, das quer zum Rüttelsieb 14 steht und das gegenüber der Horizontalen einen Winkel von ca. 40° einschließt. Die Oberfläche des Förderbandes 10, das hier als Separator im Sinne der gegenständlichen Erfindung dient, ist mit quer stehenden Leisten bestückt. Die Umlaufgeschwindigkeit dieses Förderbandes 10 ist relativ hoch gewählt und beträgt ca. 300 mm/sec. An die Abwurfseite 34 dieses Förderbandes 10 schließt eine Kammer 35 an mit einer vertikalen Zwischenwand 36. Der Boden 37 dieser Kammer ist zweckmäßigerweise offen, so daß unter die Kammer 35 Behälter angestellt oder Säcke angehängt werden können, was hier jedoch nicht gezeigt ist. Unterhalb des oberen Endes des Förderbandes 10 ist ferner ein Gebläse 38 mit einem Leitkanal 39, dessen Ausblasöffnung 40 gegen die Kammer 35 gerichtet ist.

Über ein Zubringerförderband 16 wird das Rüttelsieb 14 beschickt. Im Bereich dieses Zubringerförderbandes 16 ist zweckmäßigerweise ein Magnetabscheider 46 vorgesehen.

Zwischen der stirnseitigen Abwurfseite 11 des Rüttelsiebes 14 und dem Förderband 10 liegt die Ausblasmündung 12 eines Leitkanales 42 eines weiteren Gebläses 43. Dieser Ausblasmündung 12 gegenüber liegt eine weitere Sammelkammer 44, die in Fig. 9 durch eine strichlierte Linie angedeutet, in Fig. 10 jedoch zur Gänze weggelassen worden ist. In Fig. 10 wurde auch ein rückseitiges Förderband 5 (Fig. 1), über das das Siebgut abgeführt wird, aus Gründen der Übersichtlichkeit nicht dargestellt.

Zur Beschickung der Einrichtung dient das Zubringerförderband 16, das von einem mittels einer Kolben-Zylinder-Einheit verstellbaren, schwenkbar gelagerten Ausleger getragen sein kann.

Das Material, mit welchem die vorstehend beschriebene Einrichtung über das Zubringerförderband 16 beschickt wird, ist auch hier zerkleinerter Kompost, bestehend aus organischen, biologischen abbaubaren Substanzen, die von Störstoffen der eingangs erwähnten Art durchsetzt sind. Auch hier an der Abwurfseite 11 werden die grobstückigen Teile ausgeworfen, nämlich Steine und größere Holzteile und auch noch Folienreste der Müllsäcke. Der Luftstrom, der aus der Ausblasmündung 12 strömt, bläst die hier herabfallenden, relativ leichten Kunststofffetzen über das Förderband 10 hinweg in die hier stirnseitig angedeutete Sammelkammer 44.

Die schwereren Teile hingegen, nämlich Steine, Holzstücke, eventuell Scherben u.dgl. fallen auf das sich rasch bewegende Förderband 10, wobei die schweren Teile (Steine, Scherben) gegen die Laufrichtung (Pfeil 45) des Förderbandes 10 nach unten purzeln, die relativ leichten Holzstücke jedoch auf dem Förderband 10 liegenbleiben, dessen Geschwindigkeit rasch annehmen und nach oben abtransportiert werden und dann über die Abwurfseite 34 dieses Förderbandes 10 in den vorderen Raum der Kammer 35 gelangen. Eventuell hier noch mitgeführte, relativ leichte Teile werden von dem aus der Ausblasöffnung 40 austretenden Luftstrom über die Oberkante der Zwischenwand 36 hinweggetragen und fallen in den vom Förderband 10 aus gesehenen hinteren Teil der Kammer 35. Metallische Teile mit ferromagnetischen Eigenschaften können bereits auf dem Zubringerförderband 16 mittels eines Magnetabseheiders 46 ausgeschieden werden.

Die Erfahrung zeigt, daß das dem Rohkompost in der Regel beigefügte zerkleinerte Holz und die im Rohkompost befindlichen Folienfetzen, die von den Sammelsäcken herstammen, wie sie zur Entsorgung von Hausmüll flächendeckend eingesetzt werden, nur sehr schwer voneinander zu trennen sind. Um auch diese Teile voneinander zu trennen, um so einen qualitativ hochwertigen Abfallstoff zu erhalten, wird nun eine weitere Ausführungsform der Einrichtung vorgesehen, die in Fig. 11 (von der Seite gesehen) dargestellt ist. Unter dem schräg geneigten Förderband 10 ist der Leitkanal 39 mit dem Gebläse 38 angeordnet, dessen Ausblasöffnung 40 im Bereich des Abwurfendes 34 des Förderbandes 10 liegt, gegenüber diesem Abwurfende 34 vorzugsweise etwas zurückversetzt ist, wie die schematische Zeichnung nach Fig. 11 auch veranschaulicht. Diese Ausblasöffnung 40 kann, was allerdings nicht dargestellt ist, mit verstellbaren Leitlamellen bestückt sein, um den austretenden Luftstrom zu lenken und in der Menge zu regeln. An das Abwurfende 34 und die darunter befindliche Ausblasöffnung 40 des Gebläses 38 schließt eine drehbar gelagerte Trommel 47 an, die beispielsweise 1 Meter lang sein kann und deren Wandung als Sieb ausgebildet ist, beispielsweise mit einer Maschenweite von 30 x 30 mm. Der Durchmesser der Trommel 47 ist so gewählt, daß die gedachte Projektion des Abwurfendes 34 des Förderbandes 10 und der Ausblasöffnung 40 des Gebläses 38 in Längsrichtung des Förderbandes 10 gesehen innerhalb der Umfangskontur der Trommel 47 liegt. Zweckmäßigerweise ist dabei der Durchmesser der Trommel 47 etwas größer als die Breite des Abwurfendes 34 des Förderbandes 10. Wie die schematische Darstellung nach Fig. 10 auch zeigt, liegt die Achse der Trommel 47 zumindest annähernd parallel mit der Längsachse des Förderbandes 10.

An die sich drehende Trommel 47 mit der als Sieb ausgebildeten Wandung schließt ein stationäres Rohrstück an, das hier als nach unten gerichteter Rohrkrümmer 48 ausgebildet ist. Unterhalb der Mündungsöffnung dieses Rohrkrümmers 48 ist ein Aufnahmebehälter 49 angeordnet. Ein weiterer Aufnahmebehälter 50 liegt unterhalb des Abwurfendes 34 des Förderbandes 10. Die Trommel 47 ist gegenüber dem Förderband 10 so angeordnet, daß die Mündungsöffnung 51 der Trommel 47 dem Abwurfende 34 des Förderbandes 10 unmittelbar benachbart liegt.

Anstelle eines Förderbandes 10, wie vorstehend erläutert, kann auch ein anderer geeigneter Endlosförderer eingesetzt werden.

Beim betriebsmäßigen Einsatz fallen auf das hier nicht dargestellte Aufgabeende des Förderbandes 10 (vergleiche Fig. 10) Holzteile und Folienfetzen, die nun von dem sich beispielsweise mit einer Geschwindigkeit von 30 cm/Sekunde bewegenden Förderband 10 nach oben transportiert werden und die nun am Abwurfende 34 in den vom Gebläse 38 erzeugten Luftstrom fallen, der in das Innere der sich drehenden Trommel 47 gerichtet ist. Die gegenüber den Folienfetzen kleinen und kompakten Holzteile und Holzstücke fallen durch den Luftstrom hindurch in einem kurzen Bogen nahe der Mündungsöffnung 51 in die Trommel 47 hinein, wobei in der Folge die Holzstückchen und Holzteile, die kleiner sind als es der Maschenweite der siebartigen Wandung der Trommel 47 entspricht, durch diese Wandung hindurch nach unten in den Aufnahmebehälter 50 gelangen, größere Holzteile und Holzstücke hingegen werden durch die sich drehende Trommel 47 über die Mündungsöffnung 51 in den genannten Aufnahmebehälter zurückgegeben.

Die leichteren und in der Regel großflächigeren Folienfetzen hingegen werden vom Luftstrom in die Trommel 47 hineingetragen und fallen entweder durch den Rohrkrümmer 48 in den Aufnahmebehälter 49 oder sie werden vorerst an der Wand der sich drehenden Trommel 47 abgelegt, von der sie aber wegen der Drehung der Trommel wieder abfallen und dabei neuerlich vom Luftstrom erfaßt und über den Rohrkrümmer 48 ausgetragen werden.

In Fig. 10 ist der Magnetabscheider 46 oberhalb des Förderbandes 16 im Bereich der oberen Umlenkrolle des Förderbandes angeordnet. Es liegt im Rahmen der Erfindung, einen Permanentmagneten innerhalb der oberen Umlenkrolle des Förderbandes anzuordnen oder die Umlenkrolle selbst magnetisch auszubilden, so daß ferromagnetische Störstoffe vom Förderband um die Umlenkrolle herum geführt werden und in der Folge vom unteren Trum des Förderbandes abfallen. Des weiteren ist es möglich, diese obere Umlenkrolle des Förderbandes 16 als Mehrstoffabscheiderrolle auszubilden, also als eine Umlenkrolle, über welche direkt sowohl ferromagnetische Störstoffe wie auch nichtferromagnetische, metallische Störstoffe ausgesondert werden können.

Dank der vorstehend erläuterten und gezeigten Einrichtung ist es möglich, einen homogenen, von Störstoffen praktisch freien Frischkompost zu erhalten, der anschließend auf eine Rotte gebracht wird, wo er dann acht bis zwölf Wochen verweilt und in bekannter Weise während dieser Zeit mehrfach umgesetzt wird. Ist vorstehend die Erfindung anhand zweier Ausführungsbeispiele zur Aufbereitung von Kompost im einzelnen erörtert worden, so sei vermerkt, daß eine Einrichtung dieser Art auch für andere Stoffgemische oder Stoffgemenge einsetzbar ist, wenn sich die Bestandteile des Gemisches bzw. Gemenges durch ihre Größe und/oder ihre Dichte bzw. Wichte unterscheiden. Die erfindungsgemäße Einrichtung ist auch einsetzbar zum Trennen von Kompostsiebresten (Mischung von Holz, Kunststoffolien, Eisenmetallen, Steinen und restlichem Kompost) in die einzelnen Materialien, wobei der Hauptanteil Holz als dringend benötigter Kohlenstoffträger für die weitere Kompostierung verwendet werden kann. Weiters können Straßenräumgut, das über Kehrmaschinen eingesammelt und aufgenommen wird und das Stoffteile unterschiedlicher Formen und unterschiedlicher Gewichte aufweist, oder auch diverse Ölschlämme ebenfalls von Störstoffen befreit werden.

| Legende zu den Hinweisziffern: | | | |
|---|---|---|---|
| 1 | Rahmen | 27 | Streichleiste |
| 2 | Steher | 28 | Rahmen |
| 3 | Federpaket | 29 | Förderband |
| 4 | Förderband | 30 | Förderband |
| 5 | Förderband | 31 | Längskante |
| 6 | Wasserbehälter | 32 | Längsholm |
| 7 | Seitenwand | 33 | Schürze |
| 8 | Kratzförderer | 34 | Abwurfseite |
| 9 | Rand | 35 | Kammer |
| 10 | Förderband | 36 | Zwischenwand |
| 11 | Abwurfseite | 37 | Boden |
| 12 | Ausblasöffnung | 38 | Gebläse |
| 13 | Rohr | 39 | Leitkanal |
| 14 | Rüttelsieb | 40 | Ausblasöffnung |
| 15 | Saugmundstück | 41 | |
| 16 | Zubringerförderband | 42 | Leitkanal |
| 17 | Ausleger | 43 | Gebläse |
| 18 | Pfeil | 44 | Sammelkammer |
| 19 | Unwucht | 45 | Pfeil |
| 20 | Pfeil | 46 | Magnetabscheider |
| 21 | Kolben-Zylinder-Einheit | 47 | Trommel |
| 22 | Kette | 48 | Rohrkrümmer |
| 23 | Steuerschrank | 49 | Aufnahmebehälter |
| 24 | Haken | 50 | Aufnahmebehälter |
| 25 | Rinne | 51 | Mündungsöffnung |
| 26 | Träger | | |

## Patentansprüche

1. Einrichtung zur Ausscheidung bzw. zum Trennen von Stoffen unterschiedlicher Dichte eines Stoffgemisches oder Stoffgemenges, insbesondere von Störstoffen wie Steinen, Holzteilen, Scherben, Kunststoffteilen u.dgl. aus zerkleinertem Rohkompost, dadurch gekennzeichnet, daß sie ein im wesentlichen waagrecht liegendes Rüttelsieb (14) zur Aufnahme des Stoffgemisches aufweist, das eine in bzw. gegen die Durchlaufrichtung der auszuscheidenden Störstoffe gerichtete Rüttel- und/oder Schwingbewegung ausführt und oberhalb des Rüttelsiebes (14) im wesentlichen quer zur erwähnten Durchlaufrichtung angeordnete und sich in Durchlaufrichtung bewegende Streichleisten (27) vorgesehen sind, wobei unterhalb des Rüttelsiebes (14) ein das durch das Rüttelsieb (14) fallende Siebgut seitlich austragendes Förderband ( 4) vorgesehen ist und an der einen, die Störstoffe abwerfenden Stirnseite (11) des Rüttelsiebes (14) und unterhalb dieser Stirnseite (11) mindestens eine Ausblasmündung (12) eines Gebläses (43) angeordnet ist.

2. Einrichtung nach Anspruch 1, dadurch gekennzeichnet, daß unterhalb der Stirnseite (11) des Rüttelsiebes (14) und der Ausblasmündung (12) des Gebläses ein geneigt angeordnetes Förderband vorgesehen ist.

3. Einrichtung nach Anspruch 1 oder 2, dadurch gekennzeichnet, daß das geneigt angeordnete Förderband (10) eine hohe Umlaufgeschwindigkeit, beispielsweise 300 mm/sec aufweist.

4. Einrichtung nach einem der Ansprüche 1 bis 3, dadurch gekennzeichnet, daß unterhalb der Abwurfseite (34) des geneigt stehenden Förderbandes (10) mindestens eine Ausblasöffnung (40) eines weiteren Gebläses (38) angeordnet ist. (Fig. 10)

5. Einrichtung nach Anspruch 2, dadurch gekennzeichnet, daß an das Förderband (10) eine sich drehende, beidseitig offene Trommel (47) anschließt.

6. Einrichtung nach Anspruch 5, dadurch gekennzeichnet, daß die Trommel (47) bzw. deren Wandung gelocht oder als Sieb ausgebildet ist.

7. Einrichtung nach Anspruch 5 oder 6, dadurch gekennzeichnet, daß die Achse der Trommel (47) zumindest annähernd parallel liegt mit der Längsachse des Förderbandes (10).

8. Einrichtung nach Anspruch 1, dadurch gekennzeichnet, daß das Abwurfende (34) des Förderbandes (10) und die Austrittsmündung (40) des Gebläses (38) im wesentlichen in einer Ebene liegen bzw. die Austrittsmündung (40) gegenüber dem Abwurfende (34) etwas zurückversetzt ist.

9. Einrichtung nach einem der Ansprüche 5 bis 8, dadurch gekennzeichnet, daß die gedachte Projektion des Abwurfendes (34) des Förderbandes (10) und der Austrittsmündung (40) des Gebläses (38) in Längsrichtung des Förderbandes (10) innerhalb der Umfangskontur der Trommel (47) liegt.

10. Einrichtung nach einem der Ansprüche 5 bis 9, dadurch gekennzeichnet, daß der Durchmesser der Trommel (47) etwas größer ist als die Breite des Abwurfendes (34) des Förderbandes (10).

11. Einrichtung nach Anspruch 5, dadurch gekennzeichnet, daß an die Trommel (47) ein Rohrstück als Leitorgan, vorzugsweise ein nach unten gerichteter Rohrkrümmer (48) anschließt.

12. Einrichtung nach Anspruch 6, dadurch gekennzeichnet, daß der Lochdurchmesser der Trommel (47) bzw. die Maschenweite ca. 30 mm beträgt.

13. Einrichtung nach einem der Ansprüche 5 bis 12, dadurch gekennzeichnet, daß die Mündungsöffnung (51) der Trommel (47) bzw. deren Ebene dem Abwurfende (34) des Förderbandes (10) unmittelbar benachbart liegt.

14. Einrichtung nach Anspruch 1, dadurch gekennzeichnet, daß unterhalb der die Störstoffe abwerfenden Stirnseite (11) des Rüttelsiebes (14) ein als Wasserbehälter ausgebildeter Separator für Stoffe unterschiedlicher Dichte mit endlos umlaufenden Förderbändern vorgesehen ist.

15. Einrichtung nach Anspruch 14, dadurch gekennzeichnet, daß der nach oben offene Wasserbehälter (6) einen im wesentlichen keilförmigen, sich nach unten vejüngenden Querschnitt aufweist und nahe einer schräg verlaufenden Seitenwand (7) dieses Wasserbehälters (6) und innerhalb desselben ein endlos umlaufendes Kratzband (8) angeordnet ist, dessen eine Ende im Scheitelbereich des keilförmigen Wasserbehälters (6) liegt und dessen oberes Ende oberhalb des oberen Behälterrandes (9) liegt.

16. Einrichtung nach Anspruch 15, dadurch gekennzeichnet, daß im keilförmigen Wasserbehälter (6) ein flach geneigtes, endlos umlaufendes Förderband (10) angeordnet ist und das Band vorzugsweise wasserdurchlässig ist, wobei das aufnehmende Ende des Förderbandes (10) etwas unterhalb des oberen Randes (9) des Wasserbehälters (6) liegt und das abgebende Ende des Förderbandes außerhalb des Wasserbehälters (6), und die Neigung des Förderbandes gegenüber der Horizontalen nur wenige Winkelgrade beträgt.

17. Einrichtung nach Anspruch 15 oder 16, dadurch gekennzeichnet, daß das Kratzband (8) und das Förderband (10) im Wasserbehälter (6) nebeneinander liegend angeordnet sind.

18. Einrichtung nach Anspruch 1, dadurch gekennzeichnet, daß der Separator durch mindestens zwei V-förmig zueinander angeordnete Förderbänder (29, 30) gebildet ist, die nebeneinander liegen, und der Scheitel der V-förmigen Anordnung der Förderbänder (29, 30) etwa in der vertikalen Längsmittelebene der Einrichtung liegt und das eine Förderband (29) der beiden V-förmig zueinander angeordneten Förderbänder (29, 30) um seine Längsachse etwas geneigt ist und entlang seiner tiefer liegenden Längskante (31) eine Rinne (25) angeordnet ist, die zum aufgabeseitigen unteren Ende des anderen Förderbandes (30) führt (Fig. 8).

19. Einrichtung nach Anspruch 18, dadurch gekennzeichnet, daß entlang der tiefer liegenden Randkante (31) des quergeneigten Förderbandes (29) an einem oberhalb dieser Längskante (31) verlaufenden Längsholm (32) eine nach unten hängende Schürze (33) vorgesehen ist.

20. Einrichtung nach Anspruch 1, dadurch gekennzeichnet, daß die Ausblasöffnung (12) mit mindestens einem Schlauch oder Rohr (13) verbunden ist, dessen anderseitiges Ende mindestens ein Saugmundstück (15) trägt, welches unmittelbar oberhalb des Förderbandes bzw. der Förderbänder (4, 5) angeordnet ist bzw. sind, das bzw. die das gesiebte Gut austrägt bzw. austragen und die der Erzeugung des Luftstromes in den Schläuchen oder Rohren (13) dienenden Aggregate innerhalb derselben angeordnet sind und als Axialgebläse ausgebildet sind.

21. Einrichtung nach Anspruch 1, dadurch gekennzeichnet, daß die Streichleisten (27) aus einem elastischen Material gefertigt sind und ihre Höhe größer ist als der Abstand ihrer Befestigungspunkte und/oder ihrer Befestigungslinie von der Oberfläche (21) des Siebes (14).

22. Einrichtung nach Anspruch 1 oder 21, dadurch gekennzeichnet, daß die Streichleisten (27) an holmartigen Trägern (26) befestigt sind, die endseitig an endlosen, über Antriebs-, Umlenk- und Stützrollen (23, 24, 25) geführte Ketten (22), Bänder oder Seile o.dgl. angelenkt sind und die endlosen Ketten (22), Bänder oder Seile in vertikalen Ebenen und randseitig des Siebes (14) vorgesehen sind.
